(19) **Europäisches Patentamt / European Patent Office / Office européen des brevets**

(11) **EP 3 468 182 A1**

(12) **EUROPEAN PATENT APPLICATION**

(43) Date of publication:
10.04.2019 Bulletin 2019/15

(51) Int Cl.:
*H04N 13/00* (2018.01)

(21) Application number: 17306351.2

(22) Date of filing: 06.10.2017

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: InterDigital VC Holdings, Inc.
**Wilmington, Delaware 19809 (US)**

(72) Inventors:
• LASSERRE, Sébastien
  35576 CESSON-SEVIGNE (FR)
• RICARD, Julien
  35576 CESSON-SEVIGNE (FR)
• OLIVIER, Yannick
  35576 CESSON-SEVIGNE (FR)

(74) Representative: **Huchet, Anne et al**
**InterDigital CE Patent Holdings**
**20, rue Rouget de Lisle**
**92130 Issy-les-Moulineaux (FR)**

(54) **A METHOD AND APPARATUS FOR ENCODING A POINT CLOUD REPRESENTING THREE-DIMENSIONAL OBJECTS**

(57) A colored point cloud is encoded as at least two images. The point cloud is projected onto two maps, the second map comprising a set of blocks. An interest value is computed for each block of the second map as a function of the number of points of the point cloud projected onto the given block, not already projected on the first map. The first image is encoded in the stream as obtained by the projection while blocks of the second image are encoded according to their interest value. Blocks comprising no or a few new points over the first image and/or comprising a frontier are encoded in manner that minimize their bitrate as the information they carry is already stored in the first image.

**Figure 4**

EP 3 468 182 A1

**Description**

**1. Technical Field**

The present principles generally relate to encoding and decoding of a point cloud representing three-dimensional (3D) objects. Particularly, but not exclusively, the technical field of the present principles is related to encoding/decoding of texture and depth image data obtained by projection of the 3D point cloud for representing the geometry and colors of the point cloud.

**2. Background**

The present section is intended to introduce the reader to various aspects of art, which may be related to various aspects of the present principles that are described and/or claimed below. This discussion is believed to be helpful in providing the reader with background information to facilitate a better understanding of the various aspects of the present principles. Accordingly, it should be understood that these statements are to be read in this light, and not as admissions of prior art.

A point cloud is a set of points usually intended to represent the external surface of a 3D object but also more complex geometries like hair or fur that may not be represented efficiently by other data format like meshes. Each point of a point cloud is often defined by a 3D spatial location (X, Y, and Z coordinates in an orthogonal frame of reference of the 3D space or angles $\rho$, $\varphi$ and distance d in a radial frame of reference of the 3D space) and possibly by other associated attributes such as color, represented in the RGB or YUV color space for example, a transparency, a reflectance, a normal vector, etc. Point clouds may be static or dynamic depending on whether the cloud evolves with respect to time. It should be noticed that in case of a dynamic point cloud, the number of points is not constant but, on the contrary, generally evolves with time. A dynamic point cloud is thus a time-ordered sequence of sets of points.

Virtual Reality (VR) and immersive worlds have become a hot topic recently and foreseen by many as the future of two-dimensional (2D) flat video. The basic idea is to immerse the viewer in an environment all round him by opposition to standard TV where he can only look at the virtual world in front of him. There are several gradations in the immersivity depending on the freedom of the viewer in the environment. Point clouds, especially colored point clouds, are a good format candidate to distribute VR worlds. They may be static or dynamic and are typically of averaged size (a few millions of points at a time).

Point cloud compression will succeed in storing/transmitting 3D objects for immersive worlds only if the size of the bitstream is low enough to allow a practical storage/transmission to the end-user.

It is also crucial to be able to distribute dynamic colored point clouds to the end-user with a reasonable consumption of bandwidth while maintaining an acceptable (or preferably very good) quality of experience. Similarly to video compression, a good use of temporal correlation is thought to be the crucial element that will lead to efficient compression of dynamic point clouds.

Well-known approaches project a colored point cloud representing the geometry and colors of a 3D object, onto the faces of a cube encompassing the 3D object to obtain videos on texture and depth, and code the texture and depth videos using a legacy encoder such as 3D-HEVC (an extension of HEVC whose specification is found at the ITU website, T recommendation, H series, h265, http://www.itu.int/rec/T-REC-H.265-201612-I/en annex G and I).

Performance of compression is close to video compression for each projected point, but some contents may be more complex because of occlusions, redundancy and temporal stability when dynamic point clouds are considered. Consequently, point cloud compression is more demanding than video compression in term of bit-rates.

Regarding occlusions, it is virtually impossible to get the full geometry of a complex topology without using many projections. The required resources (computing power, storage memory) for encoding/decoding all these projections are thus usually too high.

Regarding redundancy, if a point is seen twice on two different projections, then its coding efficiency is divided by two, and this can easily get much worse if a high number of projections is used. One may use non-overlapping patches before projection, but this makes the projected partition boundary unsmooth, thus hard to code, and this negatively impacts the coding performance.

Regarding temporal stability, non-overlapping patches before projection may be optimized for an object at a given time but, when this object moves, patch boundaries also move and temporal stability of the regions hard to code (= the boundaries) is lost. Practically, one gets compression performance not much better than all-intra coding because the temporal inter prediction is inefficient in this context.

Therefore, there is a trade-off to be found between seeing points at most once but with projected images that are not well compressible (bad boundaries), and getting well compressible projected images but with some points seen several times, thus coding more points in the projected images than actually belonging to the model.

## 3. Summary

The following presents a simplified summary of the present principles to provide a basic understanding of some aspects of the present principles. This summary is not an extensive overview of the present principles. It is not intended to identify key or critical elements of the present principles. The following summary merely presents some aspects of the present principles in a simplified form as a prelude to the more detailed description provided below.

The present principles relate to a method of encoding a three-dimensional point cloud. The method comprises:

- projecting the point cloud onto a first surface to obtain a first image and onto a second surface to obtain a second image, the second image comprising a plurality of blocks, pixels of the first and the second image comprising a depth attribute;
- determining, for each block of the second image, an interest value relative to the number of points of the point cloud projected onto said block and not projected onto the first image; and
- encoding said first image and encoding blocks of said second image according to the interest value of said block.

According to a particular characteristic, a block of the second image is a block of a block-based encoding codec. The encoding of the first image and blocks of the second image is performed according to the codec used for encoding both images. According to a particular characteristic, the interest value is determined as a function of a ratio between a number of points projected onto the considered block and that are not projected onto said first image. In addition, the metrics used for determining an interest value may consider the average number of neighbor pixels for the given block. According to an embodiment, the depth attribute of pixels of a block of the second image is set to a predetermined depth value if the interest value of said block is lower than a threshold. In another embodiment, pixels of the first and the second images comprise a color attribute and the color attribute of pixels of a block of the second image is set to a predetermined color value if the interest value of said block is lower than a threshold. In yet another embodiment, a block of the second image is encoded according to a local quantization parameter determined according to the interest value of the considered block. According to another embodiment, a block of the second image is encoded in a SKIP mode if the interest value of said block is lower than a threshold.

According to a particular characteristic, depth attributes and color attributes of the second image are stored in a pair of one depth image and one texture image.

The present principles also relate to a device for encoding a three-dimensional point cloud, the device comprising a memory associated with at least one processor configured to:

- project the point cloud onto a first surface to obtain a first image and onto a second surface to obtain a second image, the second image comprising a plurality of blocks, pixels of the first and the second image comprising a depth attribute;
- determine, for each block of the second image, an interest value relative to the number of points of the point cloud projected onto said block and not projected onto the first image; and
- encode said first image and encode blocks of said second image according to the interest value of the block.

According to a particular characteristic, processor is configured to determine the interest value associated with a block as a function of a ratio between a number of points projected onto said block and not projected onto said first image and of an average number of neighbor pixels in said block. The depth attribute of pixels of a block of the second image may be set to a predetermined depth value if the interest value of said block is lower than a threshold according to a specific embodiment of the present principles. In an embodiment, a block of the second image is encoded according to a local quantization parameter determined according to the interest value of the considered block. In another embodiment, a block of the second image is encoded in a SKIP mode if the interest value of said block is lower than a threshold. Depth attributes and color attributes of the second image may be stored in a pair of one depth image and one texture image.

The present principles also relate to a stream carrying data representative of a three-dimensional point cloud, the stream encoding a first image and a second image, pixels of said first and second images comprising at least a depth attribute and blocks of said second image being encoding according to an interest value determined, for each block, according to the number of points of said point cloud projected onto said block and not projected onto first image.

The present principles also relate to a method for decoding a three-dimensional point cloud. The method comprises:

- obtaining a first image and a second image, the first and second images encoding a projection of an original three-dimensional colored point cloud and pixels of the first and second images comprising a depth attribute and a color attribute;
- inverse projecting pixels of the first and the second image, coordinates of inverse projected points being obtained according to depth attribute of pixels of the first and the second image and the color of the inverse projected points being determined according to the color stored in the color attributes of the same pixels.

## 4. Brief Description of Drawings

The present disclosure will be better understood, and other specific features and advantages will emerge upon reading the following description, the description making reference to the annexed drawings wherein:

- **Figure 1** shows a three-dimensional model of an object and points of a point cloud corresponding to the 3D model, according to a non-restrictive embodiment of the present principles;
- **Figure 2** shows a 3D model, like in figure 1, of a bust of a character orthogonally projected onto the six faces of an encompassing cube, according to a non-restrictive embodiment of the present principles;
- **Figure 3** illustrates the projection of a 3D model representing several 3D objects onto a first image corresponding to a first projection surface and onto a second image corresponding to a second projection surface, according to a non-restrictive embodiment of the present principles;
- **Figure 4** shows the second image of figure 3 organized in a regular array of 16 x 10 square blocks, according to a non-restrictive embodiment of the present principles;
- **Figure 5** represents an exemplary architecture of a device which may be configured to implement a method described in relation with figures 8 and 9, according to a non-restrictive embodiment of the present principles;
- **Figure 6** illustrates a transmission of a stream between two remote devices of figure 5 over a communication network, according to an example of the present principles;
- **Figure 7** shows an example of the syntax of a stream when the data are transmitted over a packet-based transmission protocol in the context of figure 6, according to a non-restrictive embodiment of the present principles;
- **Figure 8** diagrammatically illustrates a method for encoding a three-dimensional point cloud in a stream by a device of figure 5, according to a non-restrictive embodiment of the present principles;
- **Figure 9** diagrammatically illustrates a method for decoding a three-dimensional point cloud from a stream by a device of figure 5, according to a non-restrictive embodiment of the present principles.

## 5. Detailed description of embodiments

The present principles will be described more fully hereinafter with reference to the accompanying figures, in which examples of the present principles are shown. The present principles may, however, be embodied in many alternate forms and should not be construed as limited to the examples set forth herein. Accordingly, while the present principles are susceptible to various modifications and alternative forms, specific examples thereof are shown by way of examples in the drawings and will herein be described in detail. It should be understood, however, that there is no intent to limit the present principles to the particular forms disclosed, but on the contrary, the disclosure is to cover all modifications, equivalents, and alternatives falling within the spirit and scope of the present principles as defined by the claims.

The terminology used herein is for the purpose of describing particular examples only and is not intended to be limiting of the present principles. As used herein, the singular forms "a", "an" and "the" are intended to include the plural forms as well, unless the context clearly indicates otherwise. It will be further understood that the terms "comprises", "comprising," "includes" and/or "including" when used in this specification, specify the presence of stated features, integers, steps, operations, elements, and/or components but do not preclude the presence or addition of one or more other features, integers, steps, operations, elements, components, and/or groups thereof. Moreover, when an element is referred to as being "responsive" or "connected" to another element, it can be directly responsive or connected to the other element, or intervening elements may be present. In contrast, when an element is referred to as being "directly responsive" or "directly connected" to other element, there are no intervening elements present. As used herein the term "and/or" includes any and all combinations of one or more of the associated listed items and may be abbreviated as"/".

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element without departing from the teachings of the present principles.

Although some of the diagrams include arrows on communication paths to show a primary direction of communication, it is to be understood that communication may occur in the opposite direction to the depicted arrows.

Some examples are described with regard to block diagrams and operational flowcharts in which each block represents a circuit element, module, or portion of code which comprises one or more executable instructions for implementing the specified logical function(s). It should also be noted that in other implementations, the function(s) noted in the blocks may occur out of the order noted. For example, two blocks shown in succession may, in fact, be executed substantially concurrently or the blocks may sometimes be executed in the reverse order, depending on the functionality involved.

Reference herein to "in accordance with an example" or "in an example" means that a particular feature, structure, or characteristic described in connection with the example can be included in at least one implementation of the present principles. The appearances of the phrase in accordance with an example" or "in an example" in various places in the specification are not necessarily all referring to the same example, nor are separate or alternative examples necessarily mutually exclusive of other examples.

Reference numerals appearing in the claims are by way of illustration only and shall have no limiting effect on the scope of the claims. While not explicitly described, the present examples and variants may be employed in any combination or sub-combination.

The present principles are described for encoding/decoding a point cloud but extends to the encoding/decoding of a sequence of point clouds because each colored point cloud of the sequence is sequentially encoded/decoded as described below. Point clouds may be colored.

In the following, an image or a map contains one or several arrays of samples (pixel values) in a specific image/video format which specifies all information relative to the pixel values of an image (or a video) and all information which may be used by a display and/or any other device to visualize and/or decode an image (or video) for example. An image comprises at least one component, in the shape of a first array of samples, usually a luminance component or a depth component, and, possibly, at least one other component, in the shape of at least one other array of samples, usually a color component. Or, equivalently, the same information may also be represented by a set of arrays of color samples, such as the traditional tri-chromatic RGB representation.

A pixel value is represented by a vector of **nv** values, where **nv** is the number of components. Each value of a vector is represented with a number of bits which defines a maximal dynamic range of the pixel values. A pixel may comprise components representing a color, a depth or both, for example in a RGB-D format. A texture image, also called texture map, color image or color map is an image whose pixel values represents colors of 3D points and a depth image, also called depth map, is an image whose pixel values represent the distance between 3D points of the point cloud and a projection surface. Usually, a depth image is a grey levels image.

According to the present principles, a point cloud is encoded as images, compressed and transmitted according to compression and transmission standards and decoding, from the images, as a point cloud. The point cloud may be colored. The point cloud is projected onto a first and onto a second image according to a projection mapping. The projection mapping used for the second image may be different than the projection mapping used for the first image. The second image is composed of blocks which are regions of connected pixels. These blocks may be chosen to correspond to blocks of a block-based encoding codec used to compress the second image. For each block of the second image, an interest metrics is computed. An interest value is determined as a function of the number of points projected onto this block which are not projected in the first image. The encoding of the block depends on the interest value associated with this block.

If no 3D point of the point cloud has been projected onto a pixel of first or second texture and/or depth image, said pixel has a predetermined texture and/or depth value. For instance, a predetermined value for a texture pixel may be a grey color (R=G=B=128 in a 8-bit color representation), and a predetermined value for a texture pixel may be the value zero to indicate that no point has been projection. Analysis of the depth image, by determining if the depth value of a depth pixel is close to zero or not, may be used to detect whether a 3D point has been projected onto said pixel.

If no 3D point has been projection onto any pixel belonging of a block of first or second image, all pixels have said block have said predetermined texture and/or depth value. On the other hand, having depth values of all pixels of a block set to the predetermined value (say zero depth) indicates that no 3D point has been projection of said block. Such blocks are naturally very efficiently compressed, i.e. they require a very low number of bits to be represented in the stream, by standard image/video codec like JPEG, JPEG2000, h264/AVC and h265/HEVC. Also, the interest value of such blocks with no 3D projected point is expected to be the lowest possible in the sense that said blocks carry no information on the 3D object.

If every 3D point projected onto a block of the second image is also projected onto the first image, said block carries no extra information about the 3D objects. In such a case, the interest value is expected to be as low as possible in the sense that said block carry no interesting information about the 3D objects relatively to information already carried by the first image.

If 3D points projected onto a block of the second image have not already been projected onto the first image, the information carried by these pixels of this block is to be preserved as it represents the geometry and/or colors of points which cannot be retrieved if this information is lost or degraded by the compression. The interest value of a block whose every pixel carries additional information is maximal and such a block is encoded in a way to preserve information as much as possible. The interest value attached to a block of the second image depends, for example, on the ratio of the number of pixels carrying new information about the 3D points of the point cloud over the total number of pixels forming said block. Said interest value is expected to follow an increasing function of this ratio. Also, it is expected that the interest-value-dependent encoding process of the blocks favors a precise encoding of blocks with high interest value and minimizes the encoding cost of block with lowest interest value. A trade-off between the compression interest and the interest value is implemented by the proposed principles. Different variants for this trade-off are proposed herein below.

Encoding of blocks of the second image is thus adapted to the interest value determined as a function of the number of 3D points projected onto this block and not projected onto first image. According to the present principle, 3D points of the point cloud may be projected onto a first set of images and a second set of images comprising blocks. The interest value of blocks of an image of the second set of images is determined as a function of the number of 3D points projected onto this block and not projected onto any image of the first set. Blocks of an image of the second set are encoded according to the principles of the present disclosure.

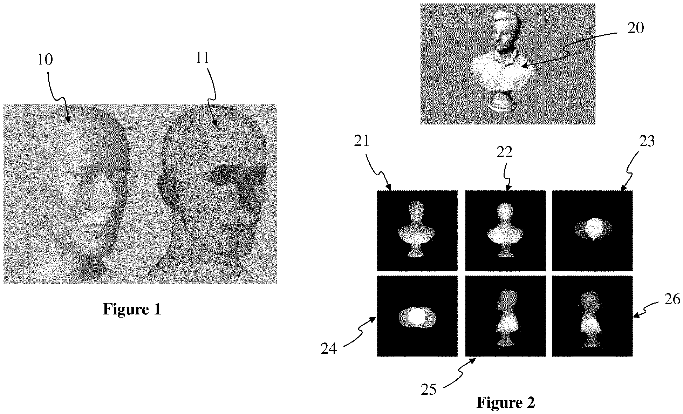

**Figure 1** shows a three-dimension (3D) model of an object 10 and a points of a point cloud 11 corresponding to 3D model 10. Model 10 may be a 3D mesh representation and points of point cloud 11 may be the vertices of the mesh. Points 11 may also be points spread on the surface of the faces of the mesh. Model 10 may also be represented as a splatted version of point of cloud 11; that is the surface of model 10 is created by splatting the point of point of cloud 11. Model 10 may also be represented by many different representations such as voxels or splines. Figure 1 illustrates that it is always possible to define a point cloud from a surface representation of a 3D object. Reciprocally it is always possible to create a surface representation of a 3D object from a point of cloud. As used herein, projecting points of a 3D object (by extension points of a 3D scene) to an image is equivalent to projecting any representation of this 3D object onto an image.

**Figure 2** shows a 3D model 20 of a bust of a character orthogonally projected onto the six faces of an encompassing cube. As the 3D model is colorless, only the depth information is stored in images 21 to 26 corresponding to the six faces of the cube. The orthogonal projection projects 3D points included in the cube onto one of its face to create a depth image per face. The resolution of the created depth images may be identical to the cube resolution, for instance points in a 16x16x16 cube are projected on six 16x16 pixel images. By permutation of the axes, one may assume without loss of generality that a face is parallel to the XY plane. Consequently, the depth (i.e. the distance from a point to the face) of a point is obtained by the component Z of the position of the point when the depth value Zface of the face equals 0 or by the difference between the component Z and the depth value Zface of the face. For each point at position (X,Y,Z), if the distance Z - Zface from the point to the face is strictly lower than the depth value of the collocated (in the sense of same X and same Y) pixel in the depth image, then said depth value is replaced by Z - Zface and the color of the collocated pixel the texture image is replaced by the color of said point. After the projection is performed for all points, all depth values of the depth image may be shifted by an offset +D. Practically, the value Zface, the origin for X and Y for the face, as well as the cube position relatively to the face, are obtained from the projection information data. The offset D is used to discriminate pixels of the images that have been projected (depth is strictly positive) or not (depth is zero). The projection process is not limited to the above described process that is provided as an exemplary embodiment only.

On the example of figure 2, the lowest value of the depth dynamic range (i.e. black color corresponding to the depth value zero) is used as a predetermined value indicating that no 3D point belonging to the encompassing cube has been projected onto the pixel. The brighter the pixel, the closer the point to the projection face. The maximal value of the depth dynamic range is attributed to the closest distance between a point and the face. The depth dynamic range may be encoded on n bits (i.e.in a range from 0 to $2^n$-1), for instance n=8 (i.e. max value = 255) or 12 bits (i.e. max value = 2047). Depth may be encoded according to a linear scale or, for example, according to a logarithmic scale as a depth value imprecision for a point far from the point of view is less important than a depth value imprecision for a point close to the point of view.

A projection of points of a 3D model onto an image projects points of the model orthogonally visible from the face. Only the closest points on the Z axis are projected onto the image, other points behind this point (i.e. farther than the closest point from the projection surface) are masked and not projected. For example, image 21 corresponds to the front view of the 3D model 20. Points of the back of the bust 20 are not projected onto pixels of image 21 because they are masked. The projection onto image 22 corresponds to the back view of the model 20. A part of points of the point cloud 20 which were not visible from the front view are projected onto image 22. Some points of the 3D model 20 are still not projected on image 21 and 22. In order to minimize the number of points which are not projected, additional projections are performed on other faces of the encompassing cube. In the example of figure 2, projection surfaces are structured as a cube encompassing the 3D model 20. The present principles are not limited to a cubical structure of the projection faces. Even with the six images of the six projections of figure 2, some points of the point cloud 20 (i.e. the 3D model 20) may be not represented, for example points of the top of the column bearing the bust. On the contrary, some points are projected several times. For instance, points of the nose of the character may be projected onto images 21, 23, 25 and/or 26 from which the nose is visible. That is a point of the nose is projected up to four times onto the six images and may be encoded several times into a bitstream comprising data responsive to the six images. This induces negative effects on the compression efficiency as a same information is coded several times. At the same time, this at the decoding, a same point may be generated several times by inverse projecting the images. Due to the imprecision introduced by the compression of the images, the decoded point cloud may comprise more points than the original one, a same original point being inverse projected at several close locations creating visual artifacts when rendering the 3D model.

Therefore, it is advantageous to avoid the encoding of several projections of a same 3D point of the point cloud in order to improve the compression efficiency and the rendering of the decoded 3D point cloud.

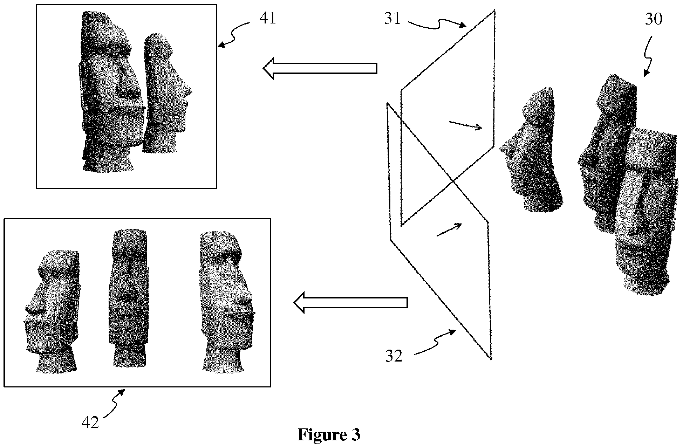

**Figure 3** illustrates the projection of a 3D model 30 representing several 3D objects onto a first surface 31 to obtain a first image 41 and onto a second surface 32 to obtain a second image 42. For the sake of clarity, surfaces 31 and 32 are flat rectangles associated with an orthogonal projection mapping. Projection surfaces may be of any shape and associated with a corresponding projection mapping. For instance, a projection surface may be a spherical cap associated with a spherical projection mapping such as an equirectangular projection mapping or a longitude-latitude projection mapping. In the example of figure 3, the 3D point cloud 30 comprises three textured (i.e. colored) Moai statues. Pixels of images 41 and 42 stores depth and color information, for example in RGB-D format. In figure 3, for the sake of clarity, only the color information is illustrated. In another embodiment, depth and color are stored in a pair of images, one for color information, for example in RGB or YUV format and one for the depth information, for example as a grey level image. The present principles apply to this embodiment without loss of generality.

A first part of the points of the point cloud is projected onto surface 31 to obtain image 41 also called the first image. A second part of the points of the point cloud is projected onto surface 32 to obtain image 42 also called the second image. First and second parts have points in common, the second part comprises points which do not belong to the first part and the union of first and second parts may not contain the entire point cloud. The encoding of the union of first and second parts may be sufficient for a rendering in which the viewer may observe the 3D model only from a restricted volume of points of view. If the end-user is not allowed to observe the back of the statues, there is no reason to encode these points. In a six degrees of freedom rendering scenario in which the viewer is allowed to observe the encoded 3D scene 30 from every angle of view, more projection images would be necessary, otherwise, parts of the model would be missing.

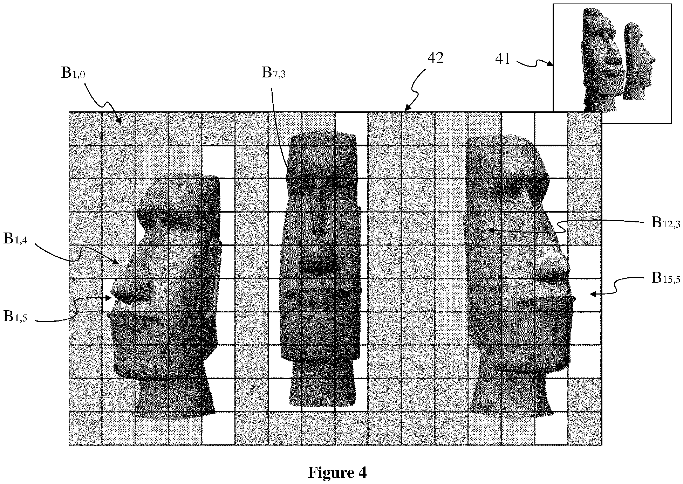

**Figure 4** show second image 42 of figure 3 organized into 160 blocks. In the example of figure 4, blocks are structured as a regular array of 16 x 10 squares. The present principles are not limited to such a regular structure. Blocks may be organized in a different structure of connected pixels. For example, if the image is generated from a spherical cap face according to an equirectangular projection mapping, blocks may be shaped to follow the equirectangular distortion, for instance, taking the shape of portions of disc. In a variant, pixels of a same block may shape a disconnected region of the image.

For each block of image 42, an interest value is computed according to the number of points projected onto the block and not projected onto first image 41 of figure 3. In the example of figure 4, blocks are darkened according to illustrate their interest value. Darkest blocks like block $B_{1,0}$ do not comprise information representing projected points of the point cloud. These blocks may be highly compressed without loss of information relevant to the 3D objects. In the example of figure 4, pixels of these blocks store a uniform predetermine color value (e.g. in RGB format R=G=B=0 or 127 or 255) and a predetermined depth value (for instance 0)indicating that there is no point projected onto this block. Dotted blocks like block $B_{1,4}$ comprise information representing points essentially also projected onto first image 41. The statue at the left of image 42 is at the forefront of image 41. Block $B_{1,4}$ comprises information about points of the nose of this statue that is visible from the point of view of surface 31. However, block $B_{1,4}$ also comprises information about points which are not also projected onto image 41. According to the present principles, the interest value determined for this block represents a tradeoff between the importance to encode the information stored in pixels of this block and the bitrate required to encode the block. The encoding is adapted according to the determined interest value. Blocks like block $B_{1,5}$ comprise *known* points (i.e. also projected onto image 41) and *new* points (i.e. not projected onto image 41). The ratio of new points over known points is greater for block B1,5 than for block $B_{1,4}$; the interest value is reflecting this ratio in the sense that the interest value should be higher for the block $B_{1,5}$ than for the block $B_{1,4}$. Blocks like block $B_{7,3}$ or $B_{15,5}$ comprise only new points; their interest value is maximal. On the example of figure 4, these blocks are not darkened at all to illustrates this maximal interest value.

A quantitative metric is used to determine the interest value of a block. According to an embodiment, the metrics is a function of the number N_new of new points for this block. According to another embodiment, the metrics is a function of the ratio N_new/N_total, where N_total is the number of 3D points projected onto said block. According to a variant, the metrics may consider different criteria, for instance, a criterion relative to the average number N_neighbor of information carrying neighbor pixels per pixel of the block. This example criterion is representative of a frontier (i.e. an edge of the 3D model according to the projection point of view) in the block. Frontiers require numerous bits to be encoded and compressed in a stream because of the high frequency of the signal at this location. Encoding a block comprising a frontier representing points that are already encoded in the first image represents a useless cost, encoding of such blocks may be adapted to reduce the required bitrate. For example, the interest value Q for a block may be determined according to equation [eq. 1].

$$[\text{eq. 1}] \qquad Q = f(N\_neighbor) \, \frac{N\_new}{N\_total}$$

Where $f$ is an increasing function defined on [0,8] and normalized such that $f(8)$ = 1. The shape of function $f$ may depend on the global quantization parameter of the codec used for compressing the second image, for instance JPEG, JPEG2000, h264/AVC, h265/HEVC or 3D-HEVC. Equation 1 proposes an example of metrics to determine the interest value associated with a block of the second image. According to variants, other metrics may be used without loss of generality of the present principles.

With the metrics of equation 1, the interest value of blocks with no projected points like block $B_{1,0}$ equals zero (N_new = 0). For the same reason (N_new = 0), interest value of block $B_{12,3}$ is also zero despite the value of $f(N\_neighbor)$=1. Blocks $B_{1,5}$ and $B_{15,5}$ have a positive interest value greater than zero as they comprise information relative to new points. However their interest value is not maximal because the ratio N_new/N_total is low compared to the same ratio for block $B_{7,3}$ for example, and also because the blocks comprise a frontier leading to a value $f(N\_neighbor)<1$. Block $B_{7,3}$ has an almost maximal interest value as every points projected onto this block are new and as it is a *full* block without shapr edges ($f(N\_neighbor)\approx1$).

Different variants of adaptive encoding are proposed by the present principles. These variants may be combined or considered alone. The present principles are though not limited to the described variants but also extends to any adaptive encoding which would perform a similar technical effect of reducing the bitrate of the encoding of a block having a low interest value. For example, if the interest value associated with a block is lower than a threshold (i.e. the block comprises no or few information representing new points and/or comprises a high frequency topology), the depth component of pixels of the block are set to a predetermined value indicating that no point has been projected onto the pixel. In a variant, if pixels of the second image comprise a color attribute, the value of the color attribute of pixels of a block are set to a predetermined color value (e.g. grey, black or white). So, every pixel of a block stores a same value and the encoding of this block requires a very little number of bits when using a standard block-based image/video codec. In a variant, if the codec used for encoding the second image allow an adaptive encoding of a block by using a local quantization parameter (so-called localQP as in the standard h264/AVC or h265/HEVC), a local parametrization parameter may be determined associated with a block according to the interest value of the block. For instance, the quantization parameter may be inversely proportional to the interest value, a block with the lowest interest value being encoded with the highest quantization parameter allowed by the codec and a block with the highest interest value being encoded with the global quantization parameter for example. Encoding a block with a bigger local quantization parameter reduce the require number of bits to encode the block in the stream. In another scenario of this variant, if the interest value of a block is lower than a threshold, the block is encoded with the highest quantization parameter allowed by the codec. According to another variant, if the codec includes encoding a block in a SKIP mode, blocks with a interest value lower than a threshold are encoded in SKIP mode. Encoding a block in a SKIP mode requires only one bit indicating that the content of this block has to be copied from a previous frame in the sequence of images encoded in the stream.

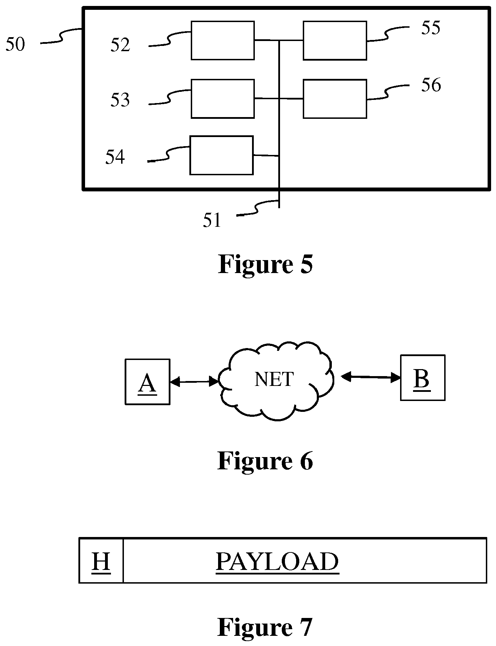

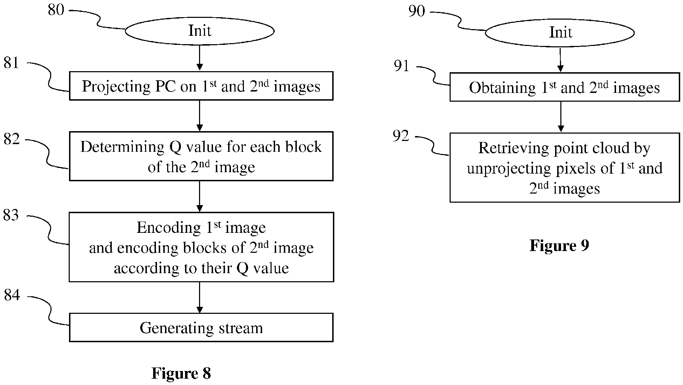

**Figure 5** represents an exemplary architecture of a device 50 which may be configured to implement a method described in relation with figures 8 and 9. Device 50 comprises following elements that are linked together by a data and address bus 801:

- a microprocessor 52 (or CPU), which is, for example, a DSP (or Digital Signal Processor);
- a ROM (or Read Only Memory) 53;
- a RAM (or Random Access Memory) 54;
- an I/O interface 55 for reception of data to transmit, from an application; and
- an optional battery 56.

In accordance with an example, the battery 56 is external to the device. In each of mentioned memory, the word « register » used in the specification can correspond to area of small capacity (some bits) or to very large area (e.g. a whole program or large amount of received or decoded data). The ROM 53 comprises at least a program and parameters. The ROM 53 may store algorithms and instructions to perform techniques in accordance with present principles. When switched on, the CPU 52 uploads the program in the RAM and executes the corresponding instructions.

RAM 54 comprises, in a register, the program executed by the CPU 52 and uploaded after switch-on of the device 50, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

In accordance with an example of encoding or an encoder, the input point cloud is obtained from a source. For example, the source belongs to a set comprising:

- a local memory (53 or 54), e.g. a video memory or a RAM (or Random Access Memory), a flash memory, a ROM (or Read Only Memory), a hard disk;
- a storage interface (55), e.g. an interface with a mass storage, a RAM, a flash memory, a ROM, an optical disc or a magnetic support;
- a communication interface (55), e.g. a wireline interface (for example a bus interface, a wide area network interface, a local area network interface) or a wireless interface (such as a IEEE 802.11 interface or a Bluetooth® interface); and
- an image capturing circuit (e.g. a sensor such as, for example, a CCD (or Charge-Coupled Device) or CMOS (or Complementary Metal-Oxide-Semiconductor)).

In accordance with an example of the decoding or a decoder, the reconstructed point cloud is sent to a destination; specifically, the destination belongs to a set comprising:

- a local memory (803 or 804), e.g. a video memory or a RAM, a flash memory, a hard disk;
- a storage interface (805), e.g. an interface with a mass storage, a RAM, a flash memory, a ROM, an optical disc or a magnetic support;
- a communication interface (805), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface);
- a rendering device; and
- a display.

In accordance with examples of encoding or encoder, bitstream encoded according to the present principles is sent to a destination. As an example, encoded bitstream is stored in a local or remote memory, e.g. a video memory (54) or a RAM (54), a hard disk (53). In a variant, the encoded bitstream is sent to a storage interface (55), e.g. an interface with a mass storage, a flash memory, ROM, an optical disc or a magnetic support and/or transmitted over a communication interface (55), e.g. an interface to a point to point link, a communication bus, a point to multipoint link or a broadcast network.

In accordance with examples of decoding or decoder, a bitstream encoded according to the present principles is obtained from a source. Exemplarily, a bitstream is read from a local memory, e.g. a video memory (54), a RAM (804), a ROM (53), a flash memory (53) or a hard disk (53). In a variant, the bitstream is received from a storage interface (55), e.g. an interface with a mass storage, a RAM, a ROM, a flash memory, an optical disc or a magnetic support and/or received from a communication interface (55), e.g. an interface to a point to point link, a bus, a point to multipoint link or a broadcast network.

In accordance with examples, device 50 being configured to implement an encoding method described in relation with figure 8, belongs to a set comprising:

- a mobile device ;
- a smartphone or a TV set with 3D capture capability
- a communication device ;
- a game device ;
- a tablet (or tablet computer) ;
- a laptop ;
- a still image camera;
- a video camera ;
- an encoding chip;
- a still image server; and
- a video server (e.g. a broadcast server, a video-on-demand server or a web server).

In accordance with examples, device 50 being configured to implement a decoding method described in relation with figure 9, belongs to a set comprising:

- a mobile device ;
- a Head Mounted Display (HMD)
- (mixed reality) smartglasses
- an holographic device
- a communication device ;
- a game device ;
- a set top box;
- a TV set;
- a tablet (or tablet computer) ;
- a laptop ;
- a display
- a sterescopic display and
- a decoding chip.

According to an example of the present principles, illustrated in **figure 6,** in a transmission context between two remote devices A and B over a communication network NET, the device A comprises a processor in relation with memory RAM and ROM which are configured to implement a method for encoding a point cloud as described in relation with the figures 1 to 4 and 8 and the device B comprises a processor in relation with memory RAM and ROM which are configured to implement a method for decoding as described in relation with figure 9.

In accordance with an example, the network is a broadcast network, adapted to broadcast encoded point clouds from device A to decoding devices including the device B. A signal, intended to be transmitted by the device A, carries a bitstream encoded according to the present principles.

This signal may thus carry on at least a first and a second image comprising depth information (and optionally color information) obtained by projecting points of an input point cloud onto the images through faces according to projection mappings. Blocks of the second image are encoded according to a interest value determined according to the number of points of the point cloud projected onto said block and not projected onto the first image. According to an embodiment, the signal may also carry projection information data representative of the projection faces and/or associated projection mappings. According to an embodiment depth and color information of an image are carried by a pair of images, one texture image storing color information and one depth image storing depth information. According to an embodiment, the signal may also carry block information data representative of the structure of blocks of the second image.

**Figure 7** shows an example of the syntax of such a signal when the data are transmitted over a packet-based transmission protocol. Each transmitted packet comprises a header H and a payload PAYLOAD. According to embodiments, the payload PAYLOAD may comprise bits that represent at least the first and the second image encoded according to the present principles. The header H may comprise bits that represents metadata regarding, for instance, projections, faces, resolutions, projection mappings and/or block structures of the first and the second image.

**Figure 8** diagrammatically illustrates a method for encoding a three-dimensional point cloud in a stream by a device 50 of figure 5, according to a non-restrictive embodiment of the present principles.

In a step 80, the different parameters of the device 50 are updated. In particular, the 3D point cloud is obtained from a source, two projection surfaces are determined in the space of the 3D scene, projection mappings are initialized and sizes and resolutions of the first and the second images are determined.

In a step 81, points of the 3D point cloud are projected onto a first surface according to a first projection mapping to obtain a first image and onto a second image according to a second projection mapping to obtain a second image. First projection mappings used for the first projection may be different than the second projection mapping used for the second projection. Pixels of the first and the second images comprise at least a depth attribute. The second image comprises blocks of pixels.

In a step 82, an interest value is determined for each block of the second image according to the number of points of the point cloud projected onto the block and not projected onto the first image (also called new points). The interest value associated with a block may consider various criteria. For example, the interest metrics used to determine interest values may be a function of a ratio between the number of new points for this block and the total number of points projected on both first and second image. The metrics may also, for instance, consider the average number of neighbors of used pixels of the block. A used pixel is a pixel with a value indicating that at least a point has been projected onto this pixel. Is counted as a neighbor of a pixel, a used pixel. A pixel has from 0 to 8 neighbors.

In a step 83, the first image is encoded in the stream using a codec. Blocks of the second image are encoded according to the determined interest value associated with each block. Different variants of adaptive encoding are proposed by the present principles. These variants may be combined or considered alone. The present principles are though not limited to the described variants but also extends to any adaptive encoding which would perform a similar technical effect of reducing the bitrate of the encoding of a block having a low interest value. For example, if the interest value of a block is lower than a threshold (i.e. the block comprises no or few information representing new points and/or comprise a high frequency frontier), the depth component of pixels of the block are set to a predetermined value indicating that no point has been projected onto the pixel. In a variant, if pixels of the second image comprise a color attribute, the value of the color attribute of pixels of a block are set to a predetermined color value (e.g. grey, black or white) if the interest value of a block is lower than a threshold. When every pixel of a block store a same value, the encoding of this block requires a very little number of bits. In a variant, if the codec used for encoding the second image allow an adaptive encoding of a block by using a local quantization parameter, a local parametrization parameter may be determined for a block according to the interest value of the block. For instance, the quantization parameter may be inversely proportional to the interest value, a block with the lowest interest value being encoded with the highest quantization parameter allowed by the codec and a block with the highest interest value being encoded with the global quantization parameter for example. Encoding a block with a bigger local quantization parameter reduce the require number of bits to encode the block in the stream. In another scenario of this variant, if the interest value of a block is lower than a threshold, the block is encoded with the highest quantization parameter allowed by the codec. According to another variant, if the codec includes encoding a block in a SKIP mode, blocks with a interest value lower than a threshold are encoded in SKIP mode. Encoding a block in a SKIP mode requires only one bit indicating that the content of this block has to be copied from a previous frame in the sequence of images encoded in the stream. In a step 84, a stream comprising the encoded first and second images is generated according to the principles described in relation to figure 7.

**Figure 9** diagrammatically illustrates a method for decoding a three-dimensional point cloud from a stream by a device 50 of figure 5, according to a non-restrictive embodiment of the present principles.

In a step 90, the different parameters of the device 50 are updated. In particular, the stream is obtained from a source. In a step 91, a first and a second image are decoded from the stream. Metadata comprising information regarding projection mappings used to generate the first and the second image are also obtained, for example, from the header part of the stream.

In a step 92, pixels of the first and the second image are inverse projected to retrieve a three-dimensional point cloud. If pixels of the first and second images comprise a color attribute, the retrieved point cloud is colored.

Naturally, the present disclosure is not limited to the embodiments previously described. In particular, the present disclosure is not limited to methods and devices for encoding/decoding a stream carrying data representative of a three-dimensional point cloud (or a sequence of three-dimensional point clouds) but also extends to methods of rendering the retrieved point cloud (or sequence of point clouds) to any devices implementing these methods and notably any devices comprising at least one CPU and/or at least one GPU. The present disclosure also relates to a method (and a device configured) for transmitting and/or receiving the stream encoded according to the present principles.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

**Claims**

1. A method of encoding a three-dimensional point cloud, the method comprising:

   - projecting the point cloud onto a first surface to obtain a first image and onto a second surface to obtain a second image, the second image comprising a plurality of blocks, pixels of the first and the second image comprising a depth attribute;
   - determining, for each block of the second image, an interest value relative to the number of points of the point cloud projected onto said block and not projected onto the first image; and
   - encoding said first image and encoding blocks of said second image according to the interest value of said block.

2. The method of claim 1, wherein a block of the second image is a block of a block-based encoding codec and wherein said encoding of the first image and blocks of the second image is performed according to said codec.

3. The method of claim 1 or 2, wherein said interest value is determined as a function of a ratio between a number of points projected onto said block and not projected onto said first image and of an average number of neighbor pixels in said block

4. The method of one of the claims 1 to 3, wherein the depth attribute of pixels of a block of the second image is set to a predetermined depth value if the interest value of said block is lower than a threshold.

5. The method of one of the claims 1 to 4, wherein pixels of the first and the second images comprise a color attribute and wherein the color attribute of pixels of a block of the second image are set to a predetermined color value if the interest value of said block is lower than a threshold.

6. The method of one of the claims 1 to 4, wherein a block of the second image is encoded according to a local quantization parameter determined according to the interest value of said block.

7. The method of one of the claims 1 to 4, wherein a block of the second image is encoded in a SKIP mode if the interest value of said block is lower than a threshold.

8. The method of one of the claims 1 to 7, wherein depth attributes and color attributes of the second image are stored in a pair of one depth image and one texture image.

9. A device for encoding a three-dimensional point cloud, the device comprising a memory associated with at least one processor configured to:

   - project the point cloud onto a first surface to obtain a first image and onto a second surface to obtain a second image, the second image comprising a plurality of blocks, pixels of the first and the second image comprising a depth attribute;
   - determine, for each block of the second image, an interest value relative to the number of points of the point cloud projected onto said block and not projected onto the first image; and

- encode said first image and encode blocks of said second image according to the interest value of the block.

10. The device of claim 9, wherein said processor is configured to determine said interest value associated with a block as a function of a ratio between a number of points projected onto said block and not projected onto said first image and of an average number of neighbor pixels in said block.

11. The device of claim 9 to 10, wherein the depth attribute of pixels of a block of the second image is set to a predetermined depth value if the interest value of said block is lower than a threshold

12. The device of one of the claims 9 to 11, wherein a block of the second image is encoded according to a local quantization parameter determined according to the interest value of said block.

13. The device of one of the claims 9 to 11, wherein a block of the second image is encoded in a SKIP mode if the interest value of said block is lower than a threshold

14. The device of one of the claims 9 to 11, wherein depth attributes and color attributes of the second image are stored in a pair of one depth image and one texture image.

15. A stream carrying data representative of a three-dimensional point cloud, the stream encoding a first image and a second image, pixels of said first and second images comprising at least a depth attribute and blocks of said second image being encoding according to an interest value determined, for each block, according to the number of points of said point cloud projected onto said block and not projected onto first image.

**Figure 1**

**Figure 2**

**Figure 3**

**Figure 4**

50

52

53

54

55

56

51

**Figure 5**

A ↔ NET ↔ B

**Figure 6**

| H | PAYLOAD |
|---|---------|

**Figure 7**

80 — Init

81 — Projecting PC on 1st and 2nd images

82 — Determining Q value for each block
of the 2nd image

83 — Encoding 1st image
and encoding blocks of 2nd image
according to their Q value

84 — Generating stream

**Figure 8**

90 — Init

91 — Obtaining 1st and 2nd images

92 — Retrieving point cloud by
unprojecting pixels of 1st and
2nd images

**Figure 9**

Europäisches
Patentamt

European
Patent Office

Office européen
des brevets

**EUROPEAN SEARCH REPORT**

Application Number

EP 17 30 6351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/062117 A1 (REITMAYR GERHARD [AT]) 5 March 2015 (2015-03-05) <br> * paragraph [0011] * <br> * paragraph [0054] * | 1-15 | INV. <br> H04N13/00 |
| T | ZWICKER M ET AL: "SURFACE SPLATTING", COMPUTER GRAPHICS. SIGGRAPH 2001. CONFERENCE PROCEEDINGS. LOS ANGELES, CA, AUG. 12 - 17, 2001; [COMPUTER GRAPHICS PROCEEDINGS. SIGGRAPH], NEW YORK, NY : ACM, US, <br> 12 August 2001 (2001-08-12), pages 371-378, XP001049907, <br> DOI: 10.1145/383259.383300 <br> ISBN: 978-1-58113-374-5 <br> * figures 4,7 * <br> * page , 8 * | | |
| A | WO 2013/049388 A1 (DOLBY LAB LICENSING CORP [US]) 4 April 2013 (2013-04-04) <br> * figures 1, 4-6,15 * <br> * page 49 * <br> * paragraph [0062] - paragraph [0063] * | 1-15 | |
| A | EP 2 515 539 A1 (THOMSON LICENSING [FR]) 24 October 2012 (2012-10-24) <br> * paragraph [0004] * <br> * paragraph [0007] * <br> * paragraph [0017] - paragraph [0025] * | 1-15 | TECHNICAL FIELDS SEARCHED (IPC) <br><br> H04N |
| A | WO 2013/162774 A1 (APPLIED MATERIALS INC [US]; YANG YAO-HUNG [US]; OH JEONGHOON [US]; HOO) 31 October 2013 (2013-10-31) <br> * paragraph [0075] * | 1-15 | |

-/--

The present search report has been drawn up for all claims

| Place of search | Date of completion of the search | Examiner |
|---|---|---|
| Berlin | 4 April 2018 | Raeymaekers, Peter |

EPO FORM 1503 03.82 (P04C01)

page 1 of 2

Europäisches
Patentamt

European
Patent Office

Office européen
des brevets

**EUROPEAN SEARCH REPORT**

Application Number

EP 17 30 6351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | SEBASTIEN LASSERRE: "Point Cloud Compression presentation to the video groups", 118. MPEG MEETING; 3-4-2017 - 7-4-2017; HOBART; (MOTION PICTURE EXPERT GROUP OR ISO/IEC JTC1/SC29/WG11),, no. m40715, 6 April 2017 (2017-04-06), XP030069059, * the whole document * | 1-15 | |
| A | ESMAEIL FARAMARZI ET AL: "OMAF: Point cloud video track", 119. MPEG MEETING; 17-7-2017 - 21-7-2017; TORINO; (MOTION PICTURE EXPERT GROUP OR ISO/IEC JTC1/SC29/WG11),, no. m41206, 11 July 2017 (2017-07-11), XP030069549, * the whole document * | 1-15 | |

TECHNICAL FIELDS
SEARCHED     (IPC)

The present search report has been drawn up for all claims

| Place of search | Date of completion of the search | Examiner |
|---|---|---|
| Berlin | 4 April 2018 | Raeymaekers, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 30 6351

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2018

| Patent document cited in search report | | Publication date | Patent family member(s) | | Publication date |
|---|---|---|---|---|---|
| US 2015062117 | A1 | 05-03-2015 | CN | 105493154 A | 13-04-2016 |
| | | | EP | 3039655 A1 | 06-07-2016 |
| | | | JP | 6203406 B2 | 27-09-2017 |
| | | | JP | 2016534466 A | 04-11-2016 |
| | | | KR | 20160048901 A | 04-05-2016 |
| | | | US | 2015062117 A1 | 05-03-2015 |
| | | | WO | 2015031139 A1 | 05-03-2015 |
| WO 2013049388 | A1 | 04-04-2013 | CN | 103828359 A | 28-05-2014 |
| | | | EP | 2761878 A1 | 06-08-2014 |
| | | | US | 2014198182 A1 | 17-07-2014 |
| | | | WO | 2013049388 A1 | 04-04-2013 |
| EP 2515539 | A1 | 24-10-2012 | CN | 102752615 A | 24-10-2012 |
| | | | EP | 2515539 A1 | 24-10-2012 |
| | | | JP | 2012227929 A | 15-11-2012 |
| | | | KR | 20120118432 A | 26-10-2012 |
| | | | US | 2012262545 A1 | 18-10-2012 |
| WO 2013162774 | A1 | 31-10-2013 | TW | 201349377 A | 01-12-2013 |
| | | | US | 2013287529 A1 | 31-10-2013 |
| | | | WO | 2013162774 A1 | 31-10-2013 |

EPO FORM P0459

For more details about this annex : see Official Journal of the European Patent Office, No. 12/82